Europäisches Patentamt

**European Patent Office**

**Office européen des brevets**

(19)

(11) Publication number: **0 111 112**
**A1**

(12) **EUROPEAN PATENT APPLICATION**

(21) Application number: **83110364.3**

(22) Date of filing: **18.10.83**

(51) Int. Cl.³: **A 01 N 25/26**
**A 01 N 25/32**

(30) Priority: **03.12.82 US 446798**

(43) Date of publication of application:
**20.06.84 Bulletin 84/25**

(84) Designated Contracting States:
**AT BE CH DE FR GB IT LI NL SE**

(71) Applicant: **AMERICAN CYANAMID COMPANY**
**1937 West Main Street P.O. Box 60**
**Stamford Connecticut 06904(US)**

(72) Inventor: **Misselbrook, John.**
**12 The Grove**
**Sholing South Hampton, S02 9LX(GB)**

(72) Inventor: **London, Eric**
**Yellow Sands 20 Seafield Park Road**
**Hillhead, Fareham, Hants(GB)**

(74) Representative: **Wächtershäuser, Günter, Dr.**
**Tal 29**
**D-8000 München 2(DE)**

(54) **Granular pesticidal compositions coated with hydrophobic solids with attendant reduced dermal toxicity.**

(57) Organophosphorus pesticidal compositions of low mammalian dermal toxicity and extended soil residual toxicity. Compositions comprise granular carriers impregnated with either the phosphorus containing pesticide 0,0-diethyl S-{[(1,1-dimethylethyl)thio]methyl}phosphorodithioate, or 0,0-diethyl S-(ethylthio)methylphosphorodithioate, and are coated with a finely divided, inert, hydrophobic solid. Methods of preparation of pesticidal compositions are also provided.

EP 0 111 112 A1

Croydon Printing Company Ltd.

## GRANULAR PESTICIDAL COMPOSITIONS COATED WITH
## HYDROPHOBIC SOLID WITH ATTENDANT REDUCED DERMAL TOXICITY

The invention relates to phosphorus pesticidal compositions, and method of preparation thereof, which are characterized by having reduced mammalian dermal toxicity and extended soil residual toxicity. Compositions of the invention contain either 0,0-diethyl-S-{[(1,1-dimethylethyl)thio]-methyl}phosphorodithioate or 0,0,-diethyl S-(ethylthio)-methylphosphorodithioate, both of which are well-known organophosphorus pesticides. In addition to the selected pesticide, compositions comprise a suitable granular carrier, a glycol-type deactivator, and a hydrophobic coating material.

It is well known that the phosphorus-containing pesticides 0,0-diethyl S-{[(1,1- dimethylethyl)thio]-methyl}phosphorodithioate and 0,0- diethyl S-(ethylthio)-methylphosphorodithioate are both highly effective toxicants for the control of a broad spectrum of insects and other pests which attack and damage agriculturally important plant crops. The former pesticide is described in U.S. Patent No. 2,596,076 and a reduced-toxicity composition is described in U.S. Patent No. 4,059,700. The latter pesticide is described in U.S. Patent No. 2,759,010. Although these phosphorus pesticides are capable of advantageous agricultural utilization, they are unfortunately toxic to mammals. These pesticides are notably toxic when introduced into the human circulatory system either by ingestion, inhalation, or dermal absorption.

-2-

The utilization of 0,0-diethyl S-{[(1,1-dimethylethyl)thio]-methyl}phosphorodithioate or 0,0-diethyl S-(ethylthio)-methylphosphorodithioate as pesticides represents a potential hazard to individuals engaged in the application, storing, transportation, distribution or other uses of these chemicals. Commercial preparations of these pesticides often employ various granular carriers in which the toxicant is adsorbed or absorbed onto or into the carrier. These granular carrier compositions provide a more dilute composition of the active pesticide for appropriate applications in agronomic uses, and also serve to attenuate the potential use hazard by reducing potential dermal absorption. Even though such formulated compositions tend to reduce the potential hazard of dermal absorption of these pesticides, it is desirable to further reduce this hazard.

It has been found that when solid granular compositions containing an aforementioned pesticide are treated with certain inert finely divided hydrophobic silicas, or with other inert finely divided water-repellant solids, the resultant hydrophobic solid coated compositions possess advantageously a 1.2 to 2.4-fold margin of safety due to their lowered mammalian dermal toxicity when compared to similar, uncoated compositions. Pesticidal activity and physical integrity remain unimpaired. These effects are accomplished by applying certain finely particulated hydrophobic silicas or other hydrophobic solids to the surfaces of said impregnated pesticidal granules. It has also been unexpectedly discovered that pesticidal compositions of the present invention advantageously have increased soil residual toxicity when compared to analogous non-coated compositions.

Conveniently, the coated granular compositions of the invention are prepared in a plurality of steps. Prior to hydrophobic solids coating, a suitable granular carrier is impregnated with about 2 to 15% by weight of the toxicant 0,0-diethyl S-{[(1,1-diethylmethyl)-thio]-methyl}phosphorodithioate, wherein said carrier is used in amounts of about 72 to 95% by weight (preferably about 78 to 94%) of formulation. Illustrative of said carrier is either (a) a sorptive material, such as attapulgite or montmorillonite (clays), brick chips, pumice, talc, volcanic cinders, corncob grits, or (b) a non-sorptive material, such as sand or limestone chips. With some types of sorptive material (i.e., clays) a deactivator such as ethylene glycol, di-, tri-, or tetraethylene glycol and mixtures thereof can be added to neutralize the intrinsic acidity of said material, in amounts ranging from 3 to 6% by weight of compositions. If a deactivator is incorporated into the formulation, it may be conveniently preblended with the toxicant and then sprayed on the granular carrier while the latter is being agitated. After the spraying has been completed, blending of the mixture is continued until all of the liquid is absorbed. Thereafter, about >2 to 7% (preferably >2 to 6%) by weight of a finely divided, inert, hydrophobic solid is added, and agitation of the mixture is continued until a uniform blend is obtained. Preferably, said hydrophobic solid is silica which has been made hydrophobic by methyl groups bonded chemically to its surface.

One silica suitable as a hydrophobic coating material is characterized by having: a BET* surface of 100 $\pm$ 20 $m^2/g$; average particle size of 16nm; bulk density 50 ml/100g; moisture 0.5%; ignition loss (two hours at 1000°C) 2% (contains approximately 1% chemically bonded carbon); pH 3.5 to 4.4 (4% slurry in 1:1 methanol:

* Brunear, Emmett and Teller

$H_2O$); 99.8 $SiO_2$; 0.05 $Al_2O_3$; 0.01 $Fe_2O_3$; 0.03 $TiO_2$; 0.05 HCl. The formulations so prepared are characterized by lowered mammalian dermal toxicity without any loss of insecticidal activity.

If so desired, the thus-coated granular pesticidal compositions may be oversprayed while being agitated with a polyvinyl acetate emulsion in amounts of about 0.25 to 3.0% (preferably 0.5 to 2%) by weight of formulation to minimize dusting normally associated with such compositions. Alternatively, the granular carriers which have been impregnated with a liquid toxicant, or toxicant-deactivator mixture, may be oversprayed with a polyvinyl acetate emulsion prior to the application of said finely divided, inert, hydrophobic solid, to anchor same to said granules. The polyvinyl acetate emulsion is characterized by having 60 ± 1% solids content by weight; a pH range of from 4 to 6 at 25°C; and a viscosity range of from 1800 to 3800 cps as measured by a No. 4 spindle (Brookfield) at 60 rpm.

Thus, the coated granular pesticidal compositions of the present invention show reduced mammalian dermal toxicity. They also show increased soil residual activity when compared to analogous non-coated pesticidal compositions. The following Examples illustrate the invention.

## EXAMPLE 1

Preparation of coated granular pesticidal compositions having lowered dermal toxicity.

The required amount of a designated granular carrier is agitated in a suitable blender. While in motion, the granules are sprayed with a mixture comprising a blend of the toxicant with a glycol type of deactivator
*Brunaer-Emmett and Teller (i.e. ethylene glycol, di-, tri-, or tetraethylene glycol or mixtures thereof). On completion of the spraying, agitation of the carrier is continued until all of the liquid is absorbed by the granules. Next, the required amount of finely divided hydrophobic coating material is added, and the whole is blended until the granules are uniformly coated with said coating material.

Additionally, a binding agent may be optionally sprayed onto the above coated granules. Alternatively, said binding agent may be sprayed onto the granular carrier subsequent to the application of the toxicant-deactivator mixture, and prior to the application of said hydrophobic coating material.

Compositions prepared by the above method are presented in Table I.

## TABLE I

### Coated Granular Compositions

### Composition A*

| Component | Weight in g | % By Weight of Composition |
|---|---|---|
| O,O-diethyl S-[[(1,1-dimethylethyl)thio]methyl]-phosphorodithioate (89.8% pure)† | 30.6 | 6.18 |
| Diethylene glycol | 25.0 | 5.05 |
| Hydrophobic silica; BET surface: $110 \pm 20$ $m^2$/g; average particle size: 16 nm; bulk density: $\sim$50 ml/100g; moisture %: <0.5; ignition loss at two hours/1000°C: <2 (contains approx. 1% chemically bonded carbon); pH = 3.5 to 4.3 (4% slurry in 1:1 methanol: $H_2O$); % average analysis; >99.8 $SiO_2$; <0.05 $Al_2O_3$; <0.01 $Fe_2O_3$; <0.03 $TiO_2$; <0.05 HCl; <1 C; | 10.0 | 2.02 |
| Polyvinyl acetate emulsion containing $60 \pm 1$% solids by weight; pH 4 to 6 at 25°C; viscosity, Brookfield, No. 4 spindle at 60 rpm: 1800 – 3800 cps | 5.0 | 1.01 |
| Montmorillonite granules q.s. ad 100 | 424.4 | 85.74 |
| TOTAL | 495.0 | 100.00 |

*By analysis, the composition contains 5.13%, by weight, of the named toxicant.

†Technical grade material is typically 85 to 90% pure.

TABLE I (continued)

Composition B*

| Component | Weight(g.) | % By Weight of Composition |
|---|---|---|
| O,O-diethyl S-{[(1,1-dimethylethyl)thio]methyl}-phosphorodithioate (89.8% pure)[†] | 30.6 | 6.18 |
| Diethylene glycol | 25.0 | 5.05 |
| $SiO_2$; 99% pure; average particle size: 18 nm; BET - surface area: 110 $m^2$/g; pH $\cong$ 6.5 (5% aq. slurry) | 10.0 | 2.02 |
| Polyvinyl acetate emulsion containing 60 ± 1% solids by weight; pH = 4 to 6 at 25°C; viscosity, Brookfield, No. 4 spindle at 60 rpm: 1800 - 3800 cps. | 5.0 | 1.01 |
| Montmorillonite granules q.s. ad 100 | 424.4 | 85.74 |
| TOTAL: | 495.0 | 100.00 |

*By analysis, the composition contains 5.49%, by weight, of the named toxicant.
†Technical grade material is typically 85 to 90% pure.

The montmorillonite carrier of the above compositions has the following analysis:

| Component | Range |
|---|---|
| Silica ($SiO_2$) | 68-72.5 |
| Ferric oxide ($Fe_2O_3$) | 5-7 |
| Aluminum oxide ($Al_2O_3$) | 11-15 |
| Calcium oxide (CaO) | 0.012-1.5 |
| Magnesium oxide (MgO) | 0.8-1.6 |
| Sodium oxide ($Na_2O$) | 0.08-0.4 |
| Potassium oxide ($K_2O$) | 1.1-1.6 |
| Phosphoric acid ($P_2O_5$) | 0.1-0.2 |
| Cr, Cu, Mn, Ni, Ti | trace |
| Ignition loss | 3-7.5 |

## EXAMPLE 2

### Preparation of coated granular pesticidal compositions.

By the method of Example 1, the following compositions are prepared containing the indicated amounts of toxicant.

### Series #1
(Toxicant: 3% By Weight Of Composition)

| Component | % By Weight of Composition | | | |
|---|---|---|---|---|
| | A | B | C | D |
| Toxicant*(88.4% pure) | 3.52 | 3.52 | 3.52 | 3.52 |
| Deactivator | 3.2 | 3.2 | 3.2 | 3.2 |
| Coating material | - | 2.0 | 2.0 | 4.0 |
| Binding agent | - | - | 1.0 | - |
| Granular carrier | 93.28 | 91.28 | 90.28 | 89.28 |
| TOTAL: | 100.00 | 100 00 | 100.00 | 100.00 |

*Technical grade material typically is 85 to 90% pure.

Series #2

(Toxicant: 10% By Weight of Composition)

| | % By Weight of Composition | | | |
|---|---|---|---|---|
| Component | A | B | C | D |
| Toxicant (88.4% pure) | 11.72 | 11.72 | 11.72 | 11.72 |
| Deactivator | 3.2 | 3.2 | 3.2 | 3.2 |
| Coating material | - | 2.0 | 2.0 | 4.0 |
| Binding agent | - | - | 1.0 | - |
| Granular carrier | 85.08 | 83.08 | 82.08 | 81.08 |
| TOTAL: | 100.00 | 100.00 | 100.00 | 100.00 |

In the above compositions, the toxicant is: 0,0-diethyl S-{[(1,1-dimethylethyl)thio]methyl}phosphorodithioate.

The deactivator of the above formulations has the following composition:

| Component | %<br>(By Weight) |
|---|---|
| ethylene glycol | 0.1 |
| diethylene glycol | 74.2 |
| triethylene glycol | 25.2 |
| tetraethylene glycol | 0.5 |
| | 100.0 |

specific gravity: 1.12 to 1.13;
flash point: 115°C (240°F);
ash: 0.6512 g/100 g.

The coating material is a hydrophobic silica with CH$_3$ groups chemically bonded to its surface as described in Example 1.

The binding agent is a polyvinyl acetate emulsion containing 60 ± 1% solids by weight; pH: 4 to 6 at 25°C; viscosity, Brookfield, No. 4 spindle at 60 rpm: 1800 - 3800 cps.

The carrier is an attapulgite clay of the following composition:

| Component | % (By Weight) |
|---|---|
| Silica ($SiO_2$) | 64.37 |
| Aluminum oxide ($Al_2O_3$) | 12.46 |
| Ferric oxide ($Fe_2O_2$) | 5.93 |
| Magnesium oxide (MgO) | 5.28 |
| Calcium oxide (CaO) | 0.99 |
| Sodium oxide ($Na_2O$) | 0.05 |
| Potassium oxide ($K_2O$) | 1.58 |
| Titanium dioxide ($TiO_2$) | 0.72 |
| Loss on ignition | 8.21 |

### Series #3

(Toxicant:  5% By Weight of Composition) By the above method, two samples are prepared:

Sample

A.  Conventional formulation comprising an attapulgite carrier; 5%, by weight, of the above toxicant and 5%, by weight, of the diethylene glycol.

B.  This sample has the same composition as "A" excepting that it has been coated with 2%, by weight, of a coating material as defined above, and oversprayed with 1%, by weight, of the above binding agent (Vinamul 3277).

### Series #4

(Toxicant:  2% By Weight of Composition) By the above method, two samples are prepared:

Sample

A.  Conventional formulation comprising an attapulgite carrier; 2% by  weight, of the above toxicant and 3%, by weight, of the above deactivator.

B.  This sample has the same composition as "A" excepting that it has been coated with 2%, by weight, of a coating material as defined above, and oversprayed with 1%, by weight, of the above binding agent.

## EXAMPLE 3

General method for the evaluation of dermal toxicity of
pesticidal formulations using male albino rabbits as
test animals.

Five male albino rabbits weighing approximately
2.2 to 3.5 kilograms are selected for each dosage level.
The hair is shaved from the entire trunk.

The following materials are used in dermal
toxicity tests:

(a.) Saran tubing or "vinylite" film VU 1900, 30.5
cm (12") wide, 0.04 millimeter in thickness, and long
enough to fit around the rabbit; (b.) Felt cloth bandages
measuring approximately 22.9 x 45.7 cm (9" x 18"); (c.)
pieces of 3.8 cm (1.5") adhesive tape approximately
35.6 cm (14") long.

Granular material to be evaluated is placed in the
center of the plastic film and is moistened with water.
The rabbits' underside is then moistened with water,
and the animals are placed, belly down, on the material.
The plastic is then brought up and around the animal
and secured at each end with strips of adhesive tape.
The felt cloth is then placed under the belly and brought
up and around the animal and secured to the body with
the remaining two strips of adhesive tape. The "cuff"
is removed from the test animals 24 hours after dosing,
and any remaining material is brushed away. If the
test material cannot be removed, the animal is fitted
with a fiber collar which prevents the animal from
licking the treatment area. The animals are then observed
for 14 days for signs of toxicity, skin irritation or
mortality. After this observation period, the animals
are sacrificed and weighed.

The dermal $LD_{50}$ values (mg/kg/ body weight) are
calculated for experimental data for the compositions
evaluated. The $LD_{50}$ values thus obtained are averaged.

These results are summarized in Table II below, along with the $LD_{50}$ value of the toxicant itself, and a granular non-coated formulation thereof. Compositions of experimental Series #1 to 4 are as described in Example 2.

## TABLE II

Dermal toxicity of coated granular compositions containing 0,0-diethyl S-{[(1,1-dimethylethyl)thio]methyl}-phosphorodithioate.

| Composition | $LD_{50}$ mg/kg |
|---|---|
| 0,0-diethyl S-{[(1,1-dimethylethyl)-thio]methyl}phosphorodithioate (technical) | 1 - 2 |
| Series #1 (attapulgite carrier; 3%, by weight, of toxicant) | |
| A (non-coated) | 104 |
| B | 149 |
| C | 130 |
| D | 160 |
| Series #2 (attapulgite carrier; 10%, by weight, of toxicant) | |
| A (non-coated) | 17 |
| B | 28 |
| C | 22 |
| D | 37 |
| Series #3 (attapulgite carrier; 5%, by weight, of toxicant) | |
| A (non-coated) | 43 |
| B | 75 |
| Series #4 (attapulgite carrier; 2%, by weight, of toxicant) | |
| A (non-coated) | 113 |
| B | 269 |

## EXAMPLE 4

General method for the evaluation of dermal toxicity of
pesticidal formulations using male rats as test animals.

Five male Wistar rats weighing approximately 209 to 277 g are selected for each dosage level. The hair is shaved from the ventral surface of the abdomen.

Granular material for evaluation is mixed with an equal weight of water on an aluminum foil backed with a plastic adhesive strapping. This preparation is then applied to the shaven ventral surface of the animal and fastened in place with adhesive strapping. After a contact time of 24 hours, the strapping is removed and the skin is washed with soap and water. The animals are then observed for 14 days for skin irritation or mortality. After this observation period, the animals are sacrificed and weighed.

Dermal $LD_{50}$ values (mg/kg body weight) are calculated from experimental data for the compositions evaluated. The $LD_{50}$ values obtained are averaged. These results are then summarized in Table III below, along with the $LD_{50}$ value of the toxicant itself, and a granular non-coated formulation thereof. Compositions A and B of Table III are as defined in Table I.

## TABLE III

Dermal toxicity of coated granular compositions containing 0,0-diethyl S-{[1,1-dimethylethyl)thio]methyl}phosphorodithioate.

| Composition | LD$_{50}$ mg/kg |
|---|---|
| 0,0-diethyl S-{[(1,1-dimethylethyl)-thio]methyl}phosphorodithioate (technical) | 1 - 2 |
| Granular, non-coated formulation; 5% by weight of toxicant; montmorillonite carrier | 1057<br>1493 |

### Example 1

| | |
|---|---|
| Composition <u>A</u>. (Montmorillonite carrier; 5% by weight of toxicant) | 2207 |
| Composition <u>B</u>. (Montmorillonite carrier; 5% by weight of toxicant) | 1711 |

## EXAMPLE 5

<u>Evaluation of the soil residual toxicity of compositions of the invention and analogous standard formulations</u>

One quart (950 ml) of moist (about 25% of moisture-holding capacity) potting soil is placed in a stainless steel beaker approximately 22 cm deep x 18 cm in diameter. A weighed amount of granular formulation, corresponding to the mg/qt (kg/ha) rates indicated in Table IV below, is distributed over the soil. The beaker is then capped and rotated on a mechanical mixer for two minutes (60 revolutions). Two 1-ounce (~30 ml) jars of soil are removed for 0 days mortality evaluation with southern corn rootworm (<u>Diabrotica undecipunctata howardi</u>) larvae. The remainder of the treated soil is divided between two wide-mouth pint (475 ml) treated-paper containers. Each container of soil receives 100 ml of tap water, bringing the soil to near field moisture capacity. A regime of moistening and drying continues throughout the test period. The treated soil plus the untreated control are held in the holding room at about 27°C. At weekly intervals the duplicate containers of soil are removed. The soil is then thoroughly mixed and moistened to about 25% moisture-holding capacity. At selected time intervals, two 1-ounce (~30 ml) jars of soil are removed from each container for bioassay (mortality evaluation) with southern corn rootworm larvae.

In preparation for bioassay, approximately 1 ml of millet seed is distributed throughout each 1-ounce sample of soil. Ten southern corn rootworm larvae are then added and the containers are lightly capped. After 14 days in a constant temperature room, counts of larvae are made and converted to percent mortality.

Table IV presents results of initial toxicity and length of residual toxicity to southern corn rootworm larvae of a conventional pesticidal formulation and a formulation of the invention.

It can be clearly seen from Table IV that the coated compositions of the present invention possess extended soil residual toxicity when compared to analogous non-coated compositions.

TABLE IV

Soil residual toxicity test to evaluate a composition of the invention vs a standard formulation.

| Composition | Rate: | | % Kill, Days After Treatment | | | | | | | | |
| --- | --- | --- | --- | --- | --- | --- | --- | --- | --- | --- | --- |
| | mg/qt | kg/ha | 0 | 14 | 28 | 49 | 60 | 77 | 105 | 123 | 143 |
| Control | – | – | 0 | 0 | 0 | 0 | 0 | 0 | 0 | 0 | 0 |
| Example 2 Series #3; Sample A; Uncoated, 5% toxicant | 3 | 3.36 | 100 | 100 | 100 | 100 | 100 | 100 | 100 | 95 | 0 |
| | 2 | 2.24 | 100 | 100 | 100 | 100 | 100 | 100 | 75 | 0 | 0 |
| | 1 | 1.12 | 100 | 100 | 100 | 60 | 45 | 0 | 0 | 0 | 0 |
| Example 2 Series #3; Sample B; Coated, 5% toxicant | 3 | 3.36 | 100 | 100 | 100 | 100 | 100 | 100 | 100 | 100 | 100 |
| | 2 | 2.24 | 100 | 100 | 100 | 100 | 100 | 100 | 95 | 35 | 0 |
| | 1 | 1.12 | 100 | 100 | 100 | 100 | 100 | 60 | 55 | – | 0 |

Claims:

1. A solid granular pesticidal composition comprising on a weight basis about 75% to 95% granules of an inert sorptive or non-sorptive carrier which is impregnated or coated with 2 to 15% active ingredient of the toxicant 0,0-diethyl S- [(1,1-dimethylethyl)thio]-methyl phosphorodithioate or 0,0-diethyl S-(ethylthio)-methylphosphorodithioate; characterized in that the pesticide-impregnated or -coated carrier is coated with from more than 2 to 7% of a finely divided fumed silica made hydrophobic by bonding methyl groups chemically to its surface; and optionally comprising about 0.25 to 3% of a polyvinyl acetate emulsion as a binding agent having about 60 ± 1% solids content by weight, a pH range of from about 4 to 6 at 25°C, and a viscosity range of about 1800 to 3800 cps.

2. The composition according to Claim 1 wherein the carrier-pesticide entity is optionally oversprayed with the polyvinyl acetate emulsion before the addition of the hydrophobic silica.

3. The composition according to Claims 1 or 2, wherein the carrier is attapulgite clay, montmorillonite clay, brick chips, pumice, talc, volcanic cinders, corncob grits, sand or limestone chips; and when the carrier is a sorptive clay, then a deactivator of ethylene glycol, di-, tri-, or tetraethylene glycol or mixtures thereof is incorporated into the composition in amounts from about 3 to 6% by weight of total composition to neutralize the intrinsic acidity of the carrier, provided the percent by weight amount of the carrier is lowered by an amount equal to that of the deactivator employed.

4. The composition according to Claim 1 or 3, comprising about 5% by weight of the active ingredient, about 5% by weight of diethylene glycol deactivator, coated with about 2% of a finely divided hydrophobic silica having an average particle size of 16nm, a bulk density of 50 ml/100 g, an ignition loss of <2% at two hours/1000°C, and a percent analysis of:  >99.8 $SiO_2$, <0.05 $Al_2O_3$, <0.01 $Fe_2O_3$, <0.03 $TiO_2$, <0.05 HCl, sufficient montmorillonite or attapulgite clay as a granular carrier necessary to total the composition 100%; and the carrier-pesticide-deactivator entity is oversprayed with about 1% of a polyvinyl acetate emulsion.

5.  The composition according to Claim 1, comprising about 10% of the active ingredient, about 3% of a glycol deactivator mixture wherein the mixture is ethylene glycol (about 0.1%), diethylene glycol (about 74%), triethylene glycol (about 25% and tetraethylene glycol (about 0.5%) having a specific gravity range of 1.12 to 1.13, a flash point of 115°C, and an ash content of 0.6512 g/100 g; coated with about 2%, of the finely divided hydrophobic silica.

6.  A method for the preparation of a solid granular pesticidal composition having decreased mammalian dermal toxicity and extended soil residual toxicity comprising on a weight basis:  impregnating or coating about 75 to 95% granules of an inert sorptive or non-sorptive carrier with about 2 to 15% of the toxicant 0,0-diethyl S-{[(1,1-dimethylethyl)thio]methyl} phosphorodithioate or 0,0-diethyl S-(ethylthio)methyl-phosphorodithioate, then coating the resultant carrier-toxicant entity with from more than 2 to 7% of a finely-divided fumed silica made hydrophobic by bonding methyl groups chemically to its surface; optionally overspraying said carrier-pesticide, either before or after the addition of said hydrophobic silica, with about 0.25 to 3% polyvinyl acetate emulsion as a binding agent wherein said binding agent has about a 60 ± .1% solids content by weight, a pH range of from about 4 to 6 at 25°C, and a viscosity range of from 1800 to 3800 cps; and when the above-said carrier is a sorptive clay, then incorporating simultaneously with said toxicant a deactivator of ethylene glycol, di-, tri-, or tetraethylene glycol or mixtures thereof in amounts from about 3 to 6% to neutralize the intrinsic acidity of said clay, provided the percent, by weight, amount of said carrier is lowered by an amount equal to that of the deactivator employed.

0111112

## European Patent Office

### EUROPEAN SEARCH REPORT

Application number

EP 83 11 0364

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,P | EP-A-0 016 278 (AMERICAN CYANAMID COMPANY) * Page 2, line 9 - page 3, line 13; page 5, line 31 - page 7, line 9; claims * | 1,3-6 | A 01 N 25/26 A 01 N 25/32 |
| | --- | | |
| X,Y | GB-A-2 026 866 (DUPHAR INTERNATIONAL RESEARCH) * Whole document * | 1,4,6 | |
| | --- | | |
| D,A | US-A-4 059 700 (A.D. LINDSAY) * Whole document * | 1,3,4, 6 | |
| | --- | | |
| A | GB-A-1 576 374 (AMERICAN CYANAMID COMPANY) * Page 1, line 27 - page 2, line 54; claims * | 1,3-6 | TECHNICAL FIELDS SEARCHED (Int. Cl. 3) |
| | ----- | | A 01 N |

The present search report has been drawn up for all claims

| Place of search | Date of completion of the search | Examiner |
|---|---|---|
| THE HAGUE | 15-03-1984 | FLETCHER A.S. |

BAD ORIGINAL